# EUROPEAN PATENT APPLICATION

(11) **EP 4 570 340 A1**
(43) Date of publication of application: **18.06.2025**
(21) Application number: 23215793.3
(22) Date of filing: 12.12.2023
(51) Int. Cl.: B01D 15/12, B01D 15/22, G01N 1/40, G01N 30/60

(54) **SEPARATION COLUMN WITH FILTER**

(71) Applicant: Phynexus, Inc., San Jose, CA 95136 (US)
(72) Inventor: HOANG, Lee, Santa Clara, 95051 CA (US); SALCEDO, Sean, San José, 95136 CA (US); PARASHAR, Praateek, San José, 95110 CA (US); TRAN, Duong, San José, 95148 CA (US); SHAH, Chintan, Union City, 94587 CA (US); REYES, Madeline, San José, 95818 CA (US)
(74) Representative: Brann AB

(57) **Abstract**

A separation column (1) for sample preparation comprising a column body (3) and a cap (7) and a method for attaching a filter (11) to a separation column. The column body comprises a first mesh screen (9a) attached to a first end (3a) of a first tubular wall (4) of the column body (3). The cap comprises a second mesh screen (9b) which is attached to a second tubular wall (8) of the cap (7) in a cap first end (7a). The cap comprises further a filter (11) which is provided in the cap interior (10) towards the second mesh screen (9b), wherein the cap (7) is arranged to be attached to the first tubular wall (4) of the column body (3) in the first end (3a) of the first tubular wall (4) such that the filter (11) is sandwiched between the first and second mesh screens (9a, 9b).

## Description

### Technical Field

The present invention relates to a separation column for sample preparation comprising a filter. The invention further relates to a method for attaching a filter to a separation column and to a use of a separation column.

### Background of the invention

In separation columns used for sample preparation, such as for example in chromatographic separation or filtration it may sometimes be suitable to attach a filter to the column for filtering of the sample/elution. For columns and applications run at a low backpressure the addition of a filter may increase the backpressure too much. Filters having a low backpressure are fragile and may be difficult to attach to the column in a suitable way. High backpressure filters can be used in chromatography systems such as HPLC. Sample preparation systems based upon syringe pumps, for example, are low back pressure systems and require the use of low backpressure filters.

The desirable feature of a filter is a controlled pore size that will exclude larger particles or retain particles of a specific range. Generally the smaller the pore size, the higher the resulting back pressure of the filter. A traditional filter or frit for a chromatography column is a sintered porous plastic disk. This relies upon a tortuous path for the flow of sample to separate particles based on size. Sintered porous plastic has the advantage of being very strong, but requires high pressure systems to process them. Filter paper has uniform pore sizes, have low back pressure, but they are thin and very fragile.

A specific range of columns which are run at low backpressure are pipette tip columns, such as the PhyTip^{®} pipette tip columns. WO 2005/070141 (Phynexus, Inc.) relates to extraction columns for the purification of an analyte, such as a peptide, protein or nucleic acid. The described columns may be characterized by low backpressure in use. Attaching a filter to such a pipette tip column, or to another type of separation column which is run at low backpressure, is problematic without increasing the backpressure too much.

### Summary of the invention

An object of the invention is to be able to attach a filter to a separation column without increasing the backpressure of the separation column too much.

This is achieved in a separation column and in a method according to the independent claims.

According to one aspect of the invention a separation column for sample preparation is provided. Said separation column comprises:
- a column body comprising a first tubular wall which is encircling a column interior, said first tubular wall is extending between a first end and a second end, said column body further comprising a first mesh screen which is attached to the first end of the first tubular wall and is covering a column opening into the column interior; and
- a cap comprising a second tubular wall extending between a cap first end and a cap second end, said cap further comprising a second mesh screen which is attached to the second tubular wall in the cap first end and is covering a cap opening into a cap interior encircled by the second tubular wall, wherein the cap further comprises a filter which is provided in the cap interior towards the second mesh screen and said filter is covering the cap opening,
wherein the cap is arranged to be attached to the first tubular wall of the column body in the first end of the first tubular wall such that the filter is sandwiched between the first and second mesh screens.

According to another aspect of the invention method for attaching a filter to a separation column is provided. Said method comprises the steps of:
- providing a separation column comprising a column body and a cap, said column body comprising a first tubular wall which is encircling a column interior, said first tubular wall is extending between a first end and a second end, said column body further comprising a first mesh screen which is attached to the first end of the first tubular wall and is covering a column opening into the column interior, said cap comprising a second tubular wall extending between a cap first end and a cap second end, said cap further comprising a second mesh screen which is attached to the second tubular wall in the cap first end and is covering a cap opening into a cap interior encircled by the second tubular wall;
- providing a filter dimensioned to fit inside the cap interior for covering the cap opening;
- pushing the filter into the cap interior via the cap second end; and
- attaching the cap onto the column body by entering the first end of the first tubular wall into the cap second end of the cap and forcing the first end towards the cap first end whereby the filter is sandwiched between the first mesh screen and the second mesh screen.

Hereby a filter which is suitable for low backpressure applications, i.e. a filter which will not increase the backpressure too much, can be attached to the column. Such filters are fragile and difficult to attach to the column. By attaching the cap according to the invention to the column body the filter is sandwiched between the first mesh screen which is provided in the first end of the column and the second mesh screen which is provided in the cap. The filter is inserted into the cap and has a size for fitting precisely inside the cap. Hereby the filter can be attached in a suitable way without increasing the backpressure of the system too much. Furthermore, this design allows for straightforward interchange of different filters to screen for best results. Second, there is a possibility to stack different filters within the cap to create a depth filter for applications that require one. Third, when separation kinetics are favorable, using faster flow rates would be useful. In such cases a low back-pressure filter is required to counter the high back pressures created by increased flow rates.

According to another aspect of the invention use of a separation column according to the invention in a solid phase extraction process for retaining adsorbent fines in the filter is disclosed. Adsorbent fines are for example silica fines which are released from a silica adsorbent provided in the separation column during the solid phase extraction process.

In one embodiment of the invention said separation column is a chromatography column and said column interior comprises an adsorbent. In this embodiment the first mesh screen is supporting the adsorbent inside the column body.

In one embodiment of the invention said filter has an outer periphery dimensioned such that the filter fits tight inside the cap in the cap first end. Hereby no fluid will pass between the filter periphery and inner walls of the first tubular wall of the column body. Instead all fluid which is entering the cap will pass through the filter.

In one embodiment of the invention the filter has pore sizes within the range of 0.5-10µm. Hereby the filter is a low backpressure filter, i.e. it will not increase the backpressure of the separation column too much and can be used for low backpressure applications.

In one embodiment of the invention the filter is a glass fiber filter or a cellulose filter. Such filters are low backpressure filters which are thin and fragile and therefore suitable to attach via a cap to the separation column according to the invention to maintain low backpressure. Normally these filters require a solid support such as sintered porous plastic that significantly increases backpressure.

In one embodiment of the invention the first and second mesh screens have pore sizes within the range of 15 µm - 150 µm. Hereby the first and second mesh screens do not increase the backpressure of the separation column too much.

In one embodiment of the invention the first and second mesh screens are nylon mesh screens or polyester mesh screens.

In one embodiment of the invention the first and second mesh screens are welded or glued to the first end of the first tubular wall and the cap first end of the second tubular wall respectively.

In one embodiment of the invention the first tubular wall and the second tubular wall are sized in relation to each other such that the cap can be attached to the column body by press fit.

In one embodiment of the invention the first tubular wall of the column body has a diameter within the range of 5-30 mm.

In one embodiment of the invention the separation column is a pipette tip extraction column.

In one embodiment of the invention the cap comprises at least two filters which are stacked in the cap interior.

In one embodiment of the invention the separation column is adapted for a separation method operated at low backpressure ranges between 1-20 psi. Within these pressure ranges a low backpressure filter is needed, such as for example a glass fiber filter or a cellulose filter.

Further details, advantages and embodiments of the present invention will appear from the dependent claims as well as from the detailed description below.

### Brief Description of the Drawings

Figure 1a shows schematically a separation column according to one embodiment of the invention.
Figure 1b shows schematically a cap of a separation column according to one embodiment of the invention.
Figure 1c shows schematically a cap of a separation column according to one embodiment of the invention.
Figure 2 is a bottom view of the cap as shown in Figure 1b.
Figure 3 shows the filter separate.
Figure 4 is a flow chart of a method according to one embodiment of the invention.

### Detailed Description of the invention

The present invention refers especially to separation columns used in low backpressure applications for sample preparation, such as for example pipette tip columns or other laboratory consumable. The separation column can for example be a chromatography column comprising an adsorbent or a filtration column. In low backpressure applications the attachment of a filter may increase the backpressure of the system too much. Both the filter in itself and a possible structure for attaching the filter, if such structure is used, may increase the backpressure of the system. Furthermore, filters having a low backpressure are often thin and fragile and are therefore difficult to attach to the separation column in a suitable way. Referring to a filter having low or high backpressure as well as the use of the terms low backpressure filters and high backpressure filters as used in this text is well understood in the technical field of separation columns. A low backpressure filter can be used in a system run at low backpressure, such as a sample preparation system based on syringe pumps because it will not increase the backpressure of the column too much while high backpressure filters can be used in systems run at higher backpressure such as HPLC.

In one example a filter which can retain particles larger than 10 µm, or larger than 7, 5 or 3 µm, is to be provided to the separation column. One example of use is for a chromatography column using silica as adsorbent. Fines are released from the silica and may be released into the final elution. To retain the fines within the column and prevent them from reaching the final elution a sub 10 µm filter with relatively low backpressure is required. Traditional sintered plastic frits have too much back pressure. Mesh screens with small pore sizes also have too much back pressure. One possibility is to use glass fiber filters, such as borosilicate glass fiber filters. Another possible filter can be a cellulose filter. These filters have the ability to retain resin fines and they have also a relatively fast flow rate and low back pressure. However, these filters are thin and fragile and hard to attach to the column. In traditional columns, similar filters are supported with a sintered plastic frit which serve as a base support. However, such a design greatly increases back pressure.

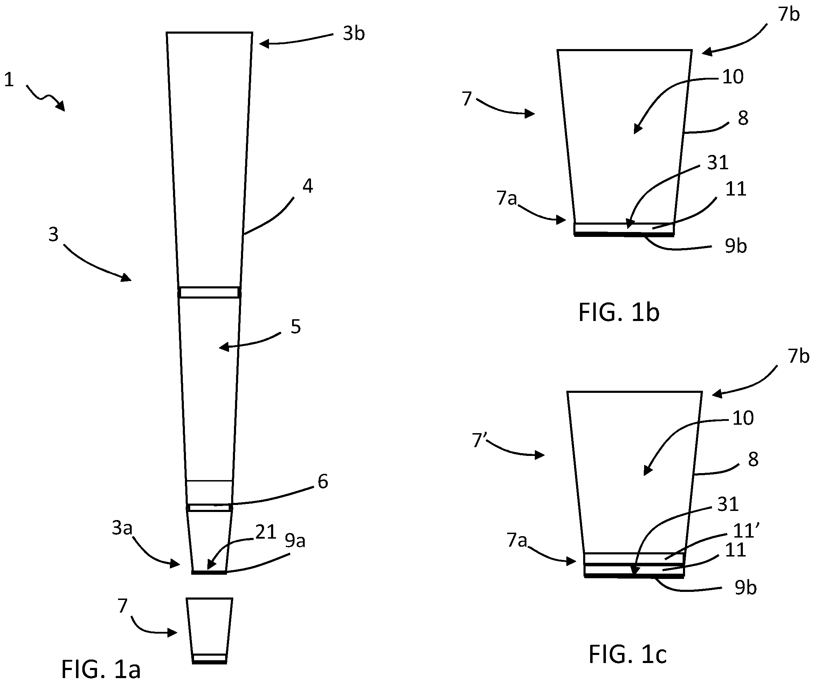

In Figures 1a and 1b a separation column 1 for sample preparation according to one embodiment of the invention is schematically shown. The separation column 1 comprises a column body 3 and a cap 7. The column body 3 comprises a first tubular wall 4 which is encircling a column interior 5. The first tubular wall 4 is extending between a first end 3a and a second end 3b. The column body 3 further comprises a first mesh screen 9a which is attached to the first tubular wall 4 at the first end 3a of the first tubular wall 4. The first mesh screen 9a is covering a column opening 21 into the column interior 5. The column opening 21 is an inlet/outlet to the column interior 5 and the first mesh screen 9a covers the whole column opening 21. The separation column further comprises a cap 7 comprising a second tubular wall 8 extending between a cap first end 7a and a cap second end 7b. The cap 7 further comprises a second mesh screen 9b which is attached to the second tubular wall 8 in the cap first end 7a. The second mesh screen 9b is covering a cap opening 31 into a cap interior 10 encircled by the second tubular wall 8. The cap 7 comprises further a filter 11 which is provided in the cap interior 10 towards the second mesh screen 9b and said filter is covering the cap opening 31. The cap opening 31 is an inlet/outlet into the interior 10 of the cap 7. The second mesh screen 9b covers the whole cap opening 31. The filter 11 is provided inside the cap 7 in the same orientation as the second mesh screen 9b such that it can be pressed against the second mesh screen 9b. The filter 11 may cover the cap opening 31 from inside the cap 7 while the second mesh screen 9b may cover the cap opening 31 from an outside of the cap 7.

The cap 7 is arranged to be attached to the first tubular wall 4 of the column body 3 in the first end 3a of the first tubular wall 4 such that the filter 11 is sandwiched between the first and second mesh screens 9a, 9b. Hereby a thin and fragile filter can be attached to the separation column. Hereby a filter which will not increase the backpressure of the separation column too much can be attached. This design allows for straightforward interchange of different filters to screen for best results. The cap 7 may also comprise more than one filter. There is a possibility to stack different filters within the cap 7; 7' for exmple to create a depth filter for applications that require one. In Figure 1c a cap 7' comprising two filters 11, 11' according to one embodiment of the invention is shown. The cap 7' shown in Figure 1c comprises two filters 11, 11' which are stacked in the cap interior 10. However, more than two filters could also be stacked in the cap, such as three, four, five or more filters. Hereby the cap 7; 7' comprises in some embodiments two or more filters which are stacked in the cap interior 10.

The first and second mesh screens 9a, 9b may have pore sizes within the range of 15µm - 150 µm. Hereby the first and second mesh screens 9a, 9b will not increase the backpressure of the separation column too much. The first and second mesh screens 9a, 9b may also be called screens and they are provided for supporting the filter and possibly to support an adsorbent in a chromatography column. The sandwich construction according to the invention allows the filter 11 to be held in correct position and prevents any material to channel around the filter 11. The first and second mesh screens 9a, 9b are strong enough for holding the filter 11 and possibly an adsorbent in place. The first and second mesh screens 9a, 9b may be for example nylon mesh screens or polyester mesh screens. In another embodiment a metal screen, for example from steel, is used as first and/or second mesh screen 9a, 9b. The first and second mesh screens 9a, 9b are suitably thin but strong enough to be a good support for the filter 11 and provides a low backpressure to the column. The first mesh screen 9a may be for example welded or glued to the first tubular wall 4 at the first end 3a and the second mesh screen 9b may be for example welded or glued to the second tubular wall 8 at the cap first end 8a. The first mesh screen 9a suitably extends over the whole transversal cross section of the first tubular wall 4 at the first end 3a such that the first mesh screen 9a covers the whole column opening 21 into the interior 5 of the column body 3. In the same way the second mesh screen 9b suitably extends over the whole transversal cross section of the second tubular wall 8 at the cap first end 7a such that the second mesh screen 9b covers the whole cap opening 31 into the interior 10 of the cap 7.

In the embodiment of the invention as shown in Figure 1a the separation column 1 is a chromatography column and said column interior 5 comprises an adsorbent 6. The adsorbent 6 can be different types of adsorbents used in chromatography and the filter 11 can be provided for different purposes but in one embodiment of the invention the adsorbent 6 is silica and the filter 11 is provided for catching fines released from the silica. Particles released from silica may have a size in the range of 5-15 µm and hereby the filter 11 is suitably configured for removing particles larger than for example 5 µm.

In another embodiment of the invention the separation column is not a chromatography column but instead a filtration column run at low backpressure. The attachment of a filter 11 according to the invention may be suitable also in such a filtration column.

These filters are for example useful for sample preparation for solid phase extractions from water samples and waste water to prevent fouling of the analytical instrument. Also, these filters would be useful in the clinic for processing biological samples in the clinic where it is desirable to remove large particles prior to analysis.

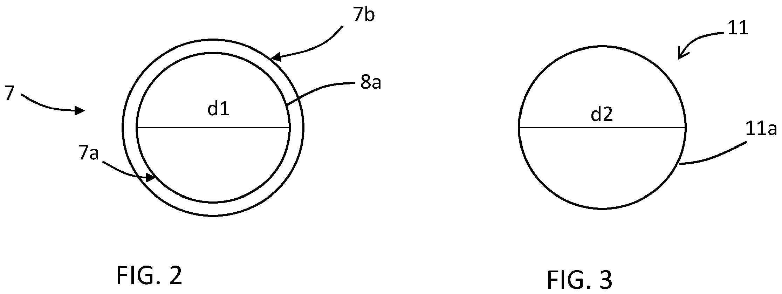

Figure 2 is a bottom view of the cap 7 as shown in Figure 1b. Figure 3 shows the filter 11 separate. Suitably said filter 11 has an outer periphery 11a dimensioned such that the filter 11 fits tight inside the cap 7 in the cap first end 7a. In the embodiment as shown in Figures 1-3 the separation column 3 and the cap 7 both have a circular cross section and the filter 11 is hereby also circular. However, another form is also possible as long as the form and dimension of the filter 11 are adapted such that it fits tight inside the cap 7 in the cap first end 7a, i.e. over a transverse cross section of the cap 7 at the cap first end 7a where the filter 11 is supposed to be positioned. In some embodiments the outer periphery 11a of the filter 11 corresponds substantially to an inner periphery 8a of the second tubular wall 8 in the cap first end 7a. However, the outer periphery 11a of the filter 11 may also be slightly bigger than the inner periphery 8a of the second tubular wall 8 in the cap first end 7a such that the filter 11 can be pressed down into a position inside the cap 7 towards the second mesh screen 9b such that an outer edge of the filter 11 is bent towards an inner wall of the second tubular wall 8. Hereby the filter 11 fits tight inside the cap 7 in the cap first end 7a and the filter 11 covers the whole cap opening 31 and no fluid can pass outside the filter 11. If the second tubular wall 8 of the cap 7 has a circular cross section the filter 11 has suitably also a circular form with substantially the same diameter, or as shown in Figures 3 a slightly bigger diameter, d2, as discussed above, than an inner diameter, d1, of the second tubular wall 8 at the cap first end 7a. If the cap inner diameter, d1, at the cap first end 7a for example is 8.3 mm the filter diameter, d2, can be a bit larger, such as 10 mm. This is however only one example. The separation column 3 and the cap 7 dimensions can of course vary within the scope of the invention. The separation column 3 can for example have a length between 10-200 mm and an inner diameter at the first end 3a between 5-30 mm and the cap 7 can have a length between 5-50 mm and an inner diameter, d1, at the cap first end 7a between 5-30 mm. Hereby the filter 11 can have a diameter, d2, corresponding to or slightly larger than the inner diameter, d1, of the cap 7, i.e. for example between 5-30 mm.

The filter 11 may have pore sizes within the range of 0.5-10µm, i.e. the filter 11 may be configured for retaining particles having sizes larger than that. Filters of different grades can be used. A filter grade is usually denoted by a letter which refers to which particle sizes that are kept by the filter. Suitably a filter grade is used by which particles larger than at least 10 µm are kept by the filter. In some applications a filter with a filter grade for retaining particles larger than for example 5 µm, or larger than 4 or 3 or 2 or 1 µm is used.

The filter 11 may be for example a glass fiber filter or a cellulose filter. Glass fiber filters can have binders or be binderless. In some embodiments the filter 11 is a borosilicate glass fiber filter. Borosilicate glass fiber filters suitable for this invention can have a retention for particle sizes larger than the pore size specified by the filter manufacturer which can be within the range of 1-15 µm. Such filters are suitable to use in low backpressure applications. They are thin and fragile and the attachment method according to this invention is suitable for attaching such filters. Cellulose filters may also be used in this invention. Different suitable cellulose filters are available having a retention rate for particles between 1-11 µm.

In the embodiment of the invention as shown in Figures 1-2 the first tubular wall 4 and the second tubular wall 8 are sized in relation to each other such that the cap 7 can be attached to the column body 3 by press fit. In some embodiments of the invention, and as shown in Figures 1a, 1b and 2, at least a part of the first and second tubular walls 4, 8 are tapered and sized such that the first end 3a of the first tubular wall 4 can be entered into the cap 7 via the cap second end 7b such that the cap 7 is threaded over the first end 3a of the column body 3. The tapering of the column body 3 and the cap 7 are dimensioned in relation to each other such that a press fit between the column body 3 and the cap 7 is achieved. Other alternatives for attaching the cap 7 to the column body 3 can be for example glue, such as UV glue, or welding, such as ultrasonic welding.

In one embodiment of the invention the separation column 1 is a pipette tip extraction column. In some embodiments of the invention the separation column 1 is adapted for a separation method operated at low backpressure, for example within the pressure ranges of 1-20 psi. Just mentioned as an example, in some embodiments the first and second mesh screens 9a, 9b and the filter 11 together with the adsorbent result in a backpressure to the separation column 1 between 1-2 psi when flowing water at 1mL per minute depending upon the bed height of the adsorbent.

The invention is also related to the use of a separation column 1 according to the invention in a solid phase extraction process for retaining adsorbent fines in the filter 11. The adsorbent fines are released, during the solid phase extraction process, from an adsorbent 6 provided in the separation column 1. The adsorbent can for example be a silica adsorbent and the adsorbent fines are then silica fines.

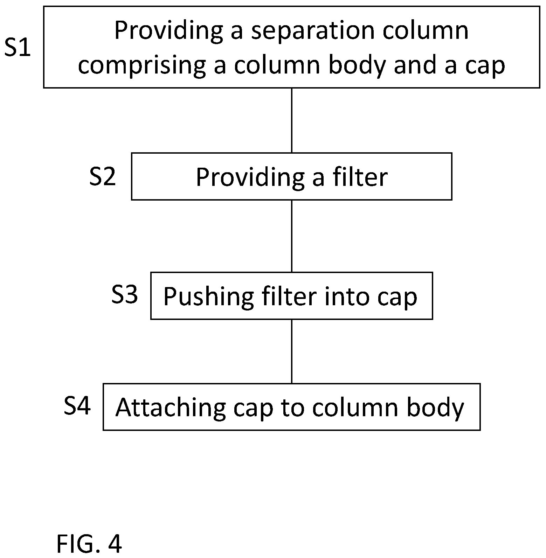

Further according to the invention a method for attaching a filter 11 to a separation column 1 is provided. The method is illustrated in the flow chart of Figure 4. The method steps are described in order below:
S1: Providing a separation column 1 comprising a column body 3 and a cap 7 as defined above according to the invention. However, the cap 7 not yet comprising the filter 11.
S2: Providing a filter 11 dimensioned to fit inside the cap interior 10 for covering the cap opening 31.
S3: Pushing the filter 11 into the cap interior 10 via the cap second end 7b. Possibly more than one filter 11, 11', such as two, three or more filters can be stacked inside the cap 7; 7', for example to create a depth filter.
S4: Attaching the cap 7 onto the column body 3 by entering the first end 3a of the first tubular wall 3 into the cap second end 7b of the cap 7 and forcing the first end 3a towards the cap first end 7a whereby the filter 11 is sandwiched between the first mesh screen 9a and the second mesh screen 9b.

## Claims

1. A separation column (1) for sample preparation comprising:
- a column body (3) comprising a first tubular wall (4) which is encircling a column interior (5), said first tubular wall (4) is extending between a first end (3a) and a second end (3b), said column body (3) further comprising a first mesh screen (9a) which is attached to the first end (3a) of the first tubular wall (4) and is covering a column opening (21) into the column interior (5); and
- a cap (7; 7') comprising a second tubular wall (8) extending between a cap first end (7a) and a cap second end (7b), said cap (7) further comprising a second mesh screen (9b) which is attached to the second tubular wall (8) in the cap first end (7a) and is covering a cap opening (31) into a cap interior (10) encircled by the second tubular wall (8), wherein the cap (7) further comprises a filter (11) which is provided in the cap interior (10) towards the second mesh screen (9b) and said filter (11) is covering the cap opening (31),
wherein the cap (7) is arranged to be attached to the first tubular wall (4) of the column body (3) in the first end (3a) of the first tubular wall (4) such that the filter (11) is sandwiched between the first and second mesh screens (9a, 9b).

2. Separation column according to claim 1, wherein said separation column (1) is a chromatography column and said column interior (5) comprises an adsorbent (6).

3. Separation column according to claim 1 or 2, wherein said filter (11) has an outer periphery (11a) dimensioned such that the filter (11) fits tight inside the cap (7: 7') in the cap first end (7a).

4. Separation column according to any one of the preceding claims, wherein the filter (11) has pore sizes within the range of 0.5-10µm.

5. Separation column according to any one of the preceding claims, wherein the filter (11) is a glass fiber filter or a cellulose filter.

6. Separation column according to any one of the preceding claims, wherein the first and second mesh screens (9a, 9b) have pore sizes within the range of 15µm - 150 µm.

7. Separation column according to any one of the preceding claims, wherein the first and second mesh screens (9a, 9b) are nylon mesh screens or polyester mesh screens.

8. Separation column according to any one of the preceding claims, wherein the first and second mesh screens (9a, 9b) are welded or glued to the first end (3a) of the first tubular wall (4) and the cap first end (7a) of the second tubular wall (8) respectively.

9. Separation column according to any one of the preceding claims, wherein the first tubular wall (4) and the second tubular wall (8) are sized in relation to each other such that the cap (7; 7') can be attached to the column body (3) by press fit.

10. Separation column according to any one of the preceding claims, wherein the first tubular wall (4) of the column body (3) has a diameter within the range of 5-30 mm.

11. Separation column according to any one of the preceding claims, wherein the separation column (1) is a pipette tip extraction column.

12. Separation column according to any one of the preceding claims, wherein the cap (7') comprises at least two filters (11, 11') which are stacked in the cap interior (10).

13. Separation column according to any one of the preceding claims, wherein the separation column (1) is adapted for a separation method operated at low backpressure ranges between 1-20 psi.

14. Use of a separation column according to any one of the preceding claims in a solid phase extraction process for retaining adsorbent fines in the filter (11).

15. Use of a separation column according to claim 14, wherein the adsorbent fines are silica fines.

16. A method for attaching a filter (11) to a separation column (1), said method comprising the steps of:
- providing a separation column (1) comprising a column body (3) and a cap (7), said column body (3) comprising a first tubular wall (4) which is encircling a column interior (5), said first tubular wall (4) is extending between a first end (3a) and a second end (3b), said column body (3) further comprising a first mesh screen (9a) which is attached to the first end (3a) of the first tubular wall (4) and is covering a column opening (21) into the column interior (5), said cap (7) comprising a second tubular wall (8) extending between a cap first end (7a) and a cap second end (7b), said cap (7) further comprising a second mesh screen (9b) which is attached to the second tubular wall (8) in the cap first end (7a) and is covering a cap opening (31) into a cap interior (10) encircled by the second tubular wall (8);
- providing a filter (11) dimensioned to fit inside the cap interior (10) for covering the cap opening (31);
- pushing the filter (11) into the cap interior (10) via the cap second end (7b); and
- attaching the cap (7) onto the column body (3) by entering the first end (3a) of the first tubular wall (3) into the cap second end (7b) of the cap (7) and forcing the first end (3a) towards the cap first end (7a) whereby the filter (11) is sandwiched between the first mesh screen (9a) and the second mesh screen (9b).
